# EUROPÄISCHE PATENTSCHRIFT

(11) **EP 2 267 302 B1**
(45) Veröffentlichungstag und Bekanntmachung des Hinweises auf die Patenterteilung: **18.12.2019**
(21) Anmeldenummer: 10006099.5
(22) Anmeldetag: 11.06.2010
(51) Int. Cl.: F03D 7/02, F03D 9/00

(54) **Windpark und Verfahren zum Regeln eines Windparks**
Wind farm and method for regulating a wind farm
Parc éolien et procédé de gestion d'un parc éolien

(30) Priorität: 26.06.2009 DE 102009030725
(43) Veröffentlichungstag der Anmeldung: 29.12.2010
(73) Patentinhaber: Senvion GmbH, 22297 Hamburg (DE)
(72) Erfinder: Riesberg, Andrè, 49134 Wallenhorst (DE); Rademacher, Hennig, 24784 Westerrönfeld (DE); Harden, Hennig, 22457 Hamburg (DE); Kunft, Guntram, 24768 Rendsburg (DE)
(74) Vertreter: Glawe, Delfs, Moll

(56) Entgegenhaltungen:
- EP-A1- 2 061 131
- WO-A2-2004/114493
- WO-A2-2007/065135
- DE-A1-102004 048 341
- JOSÉ LUIS RODRÍGUEZ-AMENEDORODRIGUEZ-AMENEDO ET AL: "Automatic Generation Control of a Wind Farm With Variable Speed Wind Turbines", IEEE TRANSACTIONS ON ENERGY CONVERSION, IEEE SERVICE CENTER, PISCATAWAY, NJ, US, Bd. 17, Nr. 2, 1. Juni 2002 (2002-06-01), XP011072090, ISSN: 0885-8969
- BRAUNER G: "NETZANBINDUNG VON WINDKRAFTANLAGEN", ELEKTROTECHNIK UND INFORMATIONSTECHNIK, SPRINGER VERLAG, WIEN, AT, Bd. 116, Nr. 7/08, 1. Januar 1999 (1999-01-01), Seiten 428-432, XP000926851, ISSN: 0932-383X

## Beschreibung

Die Erfindung betrifft einen Windpark mit einer Vielzahl von Windenergieanlagen. Der Windpark umfasst einen Übergabepunkt, an dem die von den Windenergieanlagen erzeugte elektrische Energie an ein öffentliches Stromnetz übertragen wird und für den Sollwerte vorgegeben sind. Die Erfindung betrifft ferner ein Verfahren zum Regeln eines solchen Windparks.

Bisher ist in Windparks ein einzelner zentraler Regler vorgesehen, der aus den elektrischen Istwerten am Übergabepunkt und den vom öffentlichen Stromnetz erhaltenen Sollwerten Vorgaben für den Betrieb der einzelnen Windenergieanlagen ermittelt. Die einzelnen Windenergieanlagen stellen ihren Betrieb entsprechend den Vorgaben ein. Dies führt in der Summe über alle Windenergieanlagen zu neuen elektrischen Istwerten am Übergabepunkt, die der zentrale Regler wiederum mit den vom öffentlichen Stromnetz erhaltenen Sollwerten vergleichen kann. Es besteht ein geschlossener Regelkreis, in dem der zentrale Regler unmittelbar auf die Windenergieanlagen einwirkt. Ein entsprechender Windpark ist aus dem Dokument DE 10 2004 048 341 A1 bekannt.

Mit zunehmend größer werdenden Windparks macht eine solche zentrale Regelung Schwierigkeiten. Offensichtlich steigt der Rechenaufwand mit der Zahl der Windenergieanlagen stark an. Trotz hohen Rechenaufwands nicht vollständig lösen lässt sich das Problem, dass Änderungen im Betrieb einer einzelnen Windenergieanlage sehr unterschiedliche Auswirkungen auf die elektrischen Istwerte am Übergabepunkt haben können, je nachdem wie weit die Windenergieanlage vom Übergabepunkt entfernt ist. Je weiter eine Windenergieanlage von dem Übergabepunkt entfernt ist, desto geringer ist die Regelgüte und desto größer ist die Gefahr von Instabilitäten in der Regelung.

Der Erfindung liegt ausgehend vom eingangs genannten Stand der Technik die Aufgabe zu Grunde, einen Windpark und ein Verfahren zum Regeln eines Windparks vorzustellen, die auch bei großen Windparks eine hohe Regelqualität ermöglichen. Die Aufgabe wird gelöst durch die Merkmale der unabhängigen Ansprüche. Vorteilhafte Ausführungsformen finden sich in den Unteransprüchen.

Bei dem erfindungsgemäßen Windpark ist ein Masterregler und eine Mehrzahl von Submasterreglern vorgesehen. Der Masterregler ist einer oberen Regelebene zugeordnet, die Submasterregler sind einer unteren Regelebene zugeordnet. Der Masterregler ermittelt anhand von Ober-Sollwerten und Ober-Istwerten Unter-Sollwerte für eine Mehrzahl von Submasterreglern. Die Submasterregler machen anhand der Unter-Sollwerte und zugehöriger Unter-Istwerte Vorgaben für eine Mehrzahl von Windenergieanlagen.

Bei dem erfindungsgemäßen Verfahren zum Regeln eines Windparks wird die von den Windenergieanlagen erzeugte elektrische Energie an einem Übergabepunkt an ein öffentliches Stromnetz übertragen. An dem Übergabepunkt werden die Istwerte gemessen und mit vom öffentlichen Stromnetz erhaltenen Sollwerten verglichen. Ein einer oberen Regelebene zugehöriger Masterregler vergleicht Ober-Istwerte mit Ober-Sollwerten und ermittelt daraus Vorgaben für eine Mehrzahl von Submasterreglern. Die einer unteren Regelebene zugehörigen Submasterregler nehmen die Vorgaben des Masterreglers als Unter-Sollwerte, vergleichen diese mit zugehörigen Unter-Istwerten und ermitteln daraus eine Vorgabe für den Betrieb einer Mehrzahl von Windenergieanlagen.

Zunächst werden einige Begriffe erläutert. Die Sollwerte und die Istwerte betreffen jeweils einen oder mehrere elektrische Parameter an einer Stelle des windparkinternen Stromnetzes, wie beispielsweise Spannung, Frequenz, Blindleistung, Wirkleistung. Die Istwerte können an der betreffenden Stelle gemessen werden. Sie können auch anhand von an anderer Stelle aufgenommenen Messwerten für die betreffende Stelle berechnet werden.

Auf einer Regelebene werden Istwerte und Sollwerte für eine bestimmte Stelle des windparkinternen Stromnetzes miteinander verglichen und eine Vorgabe für eine oder mehrere andere Stellen des windparkinternen Stromnetzes ermittelt. Auf der untersten Regelebene wirkt ein Anlagenregler direkt auf eine einzelne Windenergieanlage ein. Auf der obersten Regelebene werden die Istwerte mit den Sollwerten am Übergabepunkt verglichen. Die untere Regelebene im Sinne der Ansprüche ist eine Regelebene zwischen dieser obersten Regelebene und dem Anlagenregler. Zwischen der obersten Regelebene und dem Anlagenregler können eine oder mehrere weitere Regelebenen vorgesehen sein. Die obere Regelebene und die untere Regelebene im Sinne der Ansprüche folgen innerhalb dieser Hierarchie unmittelbar aufeinander, wobei die Vorgaben der oberen Regelebene die Sollwerte für die untere Regelebene bilden. Die Regler der unteren Ebene nutzen jeweils die Vorgaben eines Reglers der nächsthöheren Ebene als Sollwerte. Es kann mehr als ein Masterregler vorgesehen sein. Die Vorgaben eines Masterreglers werden von einer Mehrzahl von Submasterreglern verarbeitet. Die Vorgaben, die die Mehrzahl von Submasterreglern vom Masterregler erhält, können identisch sein, in den meisten Fällen wird aber jeder Submasterregler spezifisch für ihn bestimmte Vorgaben erhalten. Von der unteren Regelebene können die Vorgaben entweder direkt oder über eine oder mehrere weitere Regelebenen an die Mehrzahl von Windenergieanlagen übermittelt werden. Im Falle einer weiteren Regelebene übernehmen die Submasterregler sinngemäß die Funktion des Masterreglers für die von ihnen geregelten Submasterregler der nächst niedrigeren Regelebene. Indem die einzelnen Windenergieanlagen ihre Stromproduktion gemäß den Vorgaben der Anlagenregler anpassen, wirken sie auf den Istwert am Übergabepunkt ein und es besteht über alle Regelebenen hinweg ein geschlossener Regelkreis zwischen dem Übergabepunkt und den Windenergieanlagen. Für die Stabilität einer solchen kaskadenartigen Regelung ist es vorteilhaft, wenn die unteren Regelebenen jeweils eine kleinere Zeitkonstante haben als die oberen Regelebenen.

Der Oberbegriff Regelmodul umfasst alle auf den unterschiedlichen Regelebenen eingesetzten Regler. Ein Regelmodul kann also ein Masterregler, ein Submasterregler oder auch ein Anlagenregler sein. Ein Regelmodul kann so ausgelegt sein, dass es nur auf einer bestimmten Regelebene einsetzbar ist. Es gibt auch Regelmodule, die je nach Bedarf auf unterschiedlichen Regelebenen eingesetzt werden können oder zugleich auf mehreren Regelebenen eingesetzt werden können.

Der erfindungsgemäße Windpark hat den Vorteil, dass die jeweiligen Regelentscheidungen näher an dem Punkt getroffen werden, an dem sie sich auswirken. So kann beispielsweise auf der unteren Regelebene berücksichtigt werden, wie weit eine Windenergieanlage entfernt ist und wie lange es dauert, bis eine geänderte Vorgabe an diese Windenergieanlage sich in einem geänderten Istwert niederschlägt. Damit wird die Regelqualität erhöht.

Ein weiterer Nachteil der bisherigen zentralen Regelung besteht darin, dass ein Ausfall des zentralen Reglers oder einer Komponente des zentralen Reglers nicht kompensiert werden kann. Wenn der Windpark keine Vorgaben mehr von dem zentralen Regler erhält, muss er in den meisten Fällen abgeschaltet und vom öffentlichen Stromnetz getrennt werden. Bei der Erfindung kann eine Mehrzahl von Regelmodulen vorgesehen sein, die als Masterregler einsetzbar sind. Die Ober-Istwerte und die Ober-Sollwerte werden diesen Regelmodulen zugeführt, so dass sie daraus eine Vorgabe für die nachfolgende Regelebene ermitteln können. Eines der beiden Regelmodule wird in einem aktiven Modus und das andere in einem passiven Modus betrieben. Nur die Vorgaben des aktiven Regelmoduls werden auf der nachfolgenden Regelebene tatsächlich verarbeitet, während die Vorgaben des passiven Regelmoduls nicht weiter verwendet werden. Fällt das aktive Regelmodul aus, kann ohne Unterbrechung zu dem anderen Regelmodul gewechselt werden, das dann von dem passiven Modus in einen aktiven Modus schaltet. Auf die gleiche Weise kann auch jedem Submasterregler, der im aktiven Modus ist, ein weiteres Regelmodul zugeordnet werden, das im passiven Modus die gleiche Regelaufgabe übernimmt.

Sind auf diese Weise zwei Regelmodule mit derselben Regelaufgabe befasst, so können die Vorgaben, die die beiden Regelmodule machen, miteinander abgeglichen werden, um Fehler zu entdecken. Stimmen die Vorgaben der beiden Regelmodule überein, so kann dies als Anzeichen gewertet werden, dass die beiden Regelmodule richtig arbeiten. Gibt es Abweichungen zwischen den Vorgaben der beiden Regelmodule, so kann eine Plausibilitätsprüfung durchgeführt werden, welche der beiden Vorgaben fehlerhaft ist. Verharren beispielsweise die Vorgaben des einen Regelmoduls auf einem festen Wert, so deutet dies daraufhin, dass das Regelmodul nicht mehr richtig arbeitet. Es können dann automatisch die Vorgaben des anderen Regelmoduls für die betreffende Regelebene verwendet werden. Ist nicht offensichtlich, welches der Regelmodule fehlerhaft ist, muss der betreffende Teil des Windparks gegebenenfalls außer Betrieb gesetzt werden oder nachgeordnete Reglermodule fallen auf voreingestellte Werte zurück. Zusätzlich kann eine Meldung an eine Leitstelle erfolgen, um einen manuellen Eingriff zu ermöglichen.

Außer von fehlerfrei arbeitenden Regelmodulen ist die Regelung auch davon abhängig, dass den Regelmodulen die richtigen Istwerte zugeführt werden. Die Messfühler für die Erfassung der Istwerte können deswegen jeweils doppelt ausgeführt sein. Die gelieferten Werte können miteinander abgeglichen werden, um Fehler zu entdecken.

Es können für jede Regelebene Messfühler zur Erfassung der Istwerte vorgesehen sein. Ausreichen kann es auch, die Istwerte nur an einzelnen Stellen, wie beispielsweise dem Übergabepunkt und den Windenergieanlagen zu messen und die Istwerte für die übrigen Regelebenen aus diesen Messwerten zu berechnen. Ist beispielsweise ein Submasterregler für fünf Windenergieanlagen zuständig, so kann aus den Istwerten der fünf Windenergieanlagen der für den Submasterregler relevante Istwert berechnet werden.

Ferner können Regelmodule vorgesehen sein, die wahlweise als Masterregler oder als Submasterregler einsetzbar sind. Diese Regelmodule können je nach Bedarf einer der Regelebenen zugeordnet werden. Die Regelmodule können als separate Elemente im Windpark ausgebildet sein oder in die Windenergieanlagen integriert sein. In letzterem Fall kann das Regelmodul zugleich als Anlagenregler eingesetzt werden und die Regelung der einzelnen Windenergieanlage übernehmen.

Die Regelung kann so ausgebildet sein, dass jedem Regelmodul nur die für es selbst gültigen Istwerte und Sollwerte zugeführt werden. Jedes Regelmodul erhält dann nur die Istwerte und Sollwerte, die es für seine gegenwärtige Regelaufgabe benötigt. Ausreichend ist es dann, wenn jeder Masterregler nur mit den ihm zugeordneten Submasterreglern kommuniziert, es ist nicht erforderlich, dass nebengeordnete Submasterregler miteinander kommunizieren oder Informationen austauschen. Alternativ kann vorgesehen sein, dass die für ein Regelmodul gültigen Istwerte und Sollwerte auch an andere Regelmodule übertragen werden, die gerade keine Regelaufgabe übernehmen, die auf derselben Regelebene nebengeordnet sind oder die auf einer anderen Regelebene aktiv sind. Dadurch können die Regelmodule leichter zwischen den Regelaufgaben hin- und herwechseln.

Die Regelung ist vorzugsweise so aufgebaut, dass die Regelmodule sich selbsttätig organisieren. So kann beispielsweise das Regelmodul, das einer Windenergieanlage zugeordnet ist, die nach einem Stillstand als erstes wieder den Betrieb aufnimmt, feststellen, dass es das einzige aktive Regelmodul ist. Dieses Regelmodul wird sich dann als Masterregler anmelden und die Istwerte und Sollwerte vom Übergabepunkt verarbeiten. Das nächste Regelmodul, das seinen Betrieb aufnimmt, stellt fest, dass bereits ein Masterregler aktiv ist, und meldet sich als Submasterregler an, der die Vorgaben des Masterreglers verarbeitet. Die nächsten Regelmodule meldeten sich ebenfalls als Submasterregler an, bis genügend Regler für diese Regelebene aktiv sind. Die nachfolgenden Regelebenen werden sukzessive aufgefüllt, bis die zuletzt aktiv werdenden Regelmodule nur noch als Anlagenregler für eine einzelne Windenergieanlage tätig werden.

Fällt ein Masterregler aus, so ist es nicht immer möglich, die betreffende Regelaufgabe nahtlos auf ein anderes Regelmodul überzuleiten. Es kann in einem solchen Fall oder auch bei einer Unterbrechung der Datenverbindung passieren, dass die von diesem Masterregler abhängigen Submasterregler für eine Zeitspanne keine Vorgaben erhalten. Die Submasterregler können so eingerichtet sein, dass sie für eine vorgegebene Zeitspanne mit der zuletzt erhaltenen Vorgabe weiterarbeiten. Anschließend können sie auf voreingestellte Werte zurückfallen.

Alternativ kann vorgesehen sein, dass die Ober-Istwerte und die Ober-Sollwerte, von denen der Masterregler ausgeht, auch den Submasterreglern zugeführt werden. Beim Ausfall des Masterreglers können die Submasterregler sich unmittelbar an diesen Ober-Istwerten und Ober-Sollwerten orientieren. Beispielsweise können die Submasterregler solange mit den Vorgaben weiterarbeiten, die sie vor dem Ausfall des Masterreglers erhalten haben, bis die Differenz zwischen dem Ober-Istwert und dem Ober-Sollwert eine vorgegebene Schwelle überschreitet.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine erste Ausführungsform eines erfindungsgemäßen Windparks; und
- Fig. 2:: eine schematische Darstellung einer zweiten Ausführungsform eines erfindungsgemäßen Windparks.

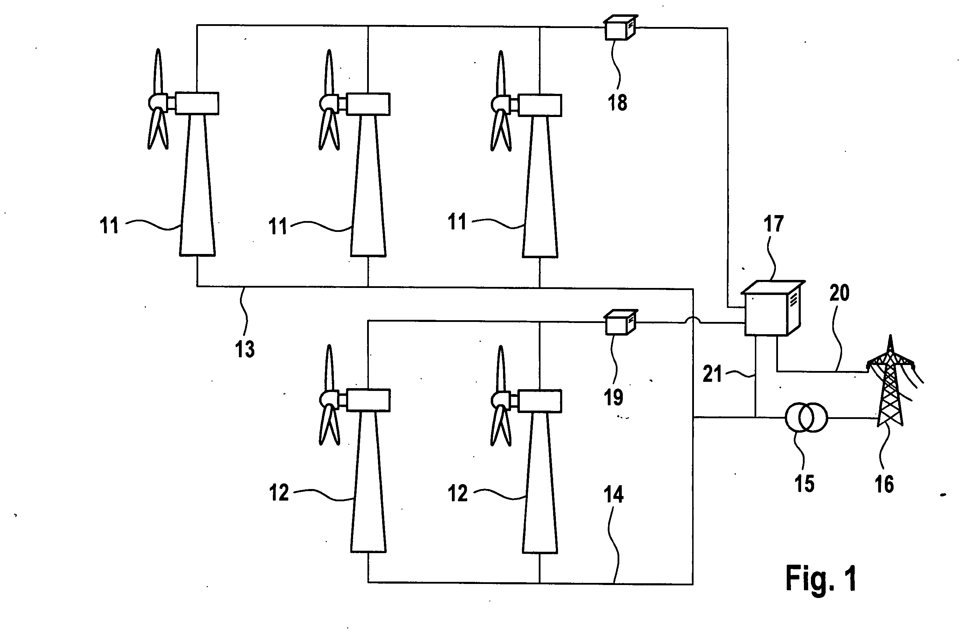

Ein in Fig. 1 gezeigter Windpark umfasst fünf Windenergieanlagen 11, 12, wobei die Windenergieanlagen 11 einem ersten Strang 13 und die Windenergieanlagen 12 einem zweiten Strang 14 zugeordnet sind. Der Begriff Strang bezeichnet eine Gruppe von Windenergieanlagen, die elektrisch auf einen gemeinsamen Punkt im Windpark einspeisen und (räumlich) hintereinander an eine gemeinsame Zuleitung angeschlossen sind. Die in dem Windpark erzeugte elektrische Energie wird an einem Übergabepunkt 15 an ein öffentliches Stromnetz 16 übergeben. Von dem öffentlichen Stromnetz 16 erhält der Windpark Vorgaben bezüglich der elektrischen Werte am Übergabepunkt 15, wie beispielsweise Spannung, Frequenz, Anteil an Blindleistung oder Wirkleistung.

In dem Windpark ist eine Reglerstruktur eingerichtet, mit der sichergestellt werden soll, dass am Übergabepunkt 15 bestimmte Sollwerte eingehalten werden. Die Sollwerte können einmalig festgelegt sein oder laufend neu vom öffentlichen Stromnetz 16 übermittelt werden. Hier ist beispielsweise der Sollwert der Frequenz fest, der betreffende Wert ist in dem Masterregler gespeichert. Hingegen erhält der Masterregler über eine Leitung 20 vom öffentlichen Stromnetz 16 laufend neue Sollwerte für beispielsweise den Blindleistungsanteil der vom Windpark abgegebenen Leistung. Die Reglerstruktur umfasst einen Masterregler 17 und zwei Submasterregler 18, 19, die jeweils einem der Stränge 13, 14 zugeordnet sind. Über eine Leitung 21 erhält der Masterregler 17 die tatsächlichen elektrischen Werte am Übergabepunkt 15. Weichen die Sollwerte von den tatsächlichen Werten am Übergabepunkt 15 ab, so ermittelt der Masterregler 17 neue Vorgaben für den Windpark. Diese Vorgaben sind nicht für die einzelnen Windenergieanlagen 11, 12, sondern für den Submasterregler 18 des Strangs 13 und den Submasterregler 19 des Strangs 14 bestimmt, wobei der Submasterregler 18 und der Submasterregler 19 unterschiedliche Vorgabe erhalten. Für die Submasterregler 18, 19 gelten die Vorgaben des Masterreglers 17 als Sollwerte für den jeweiligen Strang 13, 14. Weichen die Istwerte in den Strängen 13, 14 von den Sollwerte der Submasterregler 18, 19 ab, ermitteln die Submasterregler 18, 19 neue Vorgaben für die einzelnen Windenergieanlagen 11, 12. Die Vorgaben der Submasterregler 18, 19 werden von nicht dargestellten Anlagenreglern der Windenergieanlagen 11, 12 umgesetzt. Durch die Änderung des Betriebszustands der Windenergieanlagen 11, 12 ändern sich die Istwerte in den Strängen 13, 14 und nähern sich an die Sollwerte an. Ändern sich die elektrischen Werte in den Strängen 13, 14, so ändern sich damit auch die elektrischen Werte am Übergabepunkt 15 und der Regelkreis ist vom Masterregler 17 über die Submasterregler 18, 19 und die Windenergieanlagen 11, 12 geschlossen.

Hat beispielsweise der Masterregler 17 vom öffentlichen Stromnetz 16 die Vorgabe, dass eine bestimmte Menge an Blindleistung übergeben werden soll, so wird der Masterregler 17 diese Vorgabe unter den Submasterreglern 18, 19 aufteilen. Der Submasterregler 18, der für den Strang 13 mit drei Windenergieanlagen 11 zuständig ist, erhält beispielsweise die Vorgabe, 3/5 der angeforderten Blindleistung zu liefern. Der Submasterregler 18 verteilt diese Vorgabe wiederum unter den drei Windenergieanlagen 11. Möglich ist es beispielsweise, dass jede der Windenergieanlagen 11 1/5 der angeforderten Blindleistung zu liefern hat. Alternativ kann der Submasterregler 18 bei seiner Vorgabe berücksichtigen, dass die Windenergieanlagen 11 in unterschiedlichem Abstand zu dem Übergabepunkt 15 angeordnet sind, und die Vorgaben an die Windenergieanlagen 11 entsprechend anpassen. In einer weiteren Alternative kann der Submasterregler 18 die an den einzelnen Windenergieanlagen 11 verfügbare Regelreserve berücksichtigen und die Vorgaben im Verhältnis von Sollwert zur verfügbaren Regelreserve an den einzelnen Windenergieanlagen anpassen. Der Submasterregler 19, der für den Strang 14 mit zwei Windenergieanlagen 12 zuständig ist, würde in diesem Beispiel vom Masterregler die Vorgabe erhalten, 2/5 der angeforderten Blindleistung zu liefern. Der Submasterregler 19 kann diese Vorgabe wiederum so unter seinen Windenergieanlagen 12 verteilen, dass jede 1/5 der angeforderten Blindleistung liefert.

Der Windpark in Fig. 1 umfasst eine obere Regelebene, für die der Masterregler 17 zuständig ist, und eine untere Regelebene, auf der die Submasterregler 18, 19 parallel zueinander aktiv sind. Mit dem Masterregler 17 und den Submasterreglern 18, 19 gibt es in dem Windpark drei Regelmodule für die obere und die untere Regelebene, die Anlagenregler der einzelnen Windenergieanlagen 11, 12 sind weitere Regelmodule. Die vom öffentlichen Stromnetz 16 erhaltenen Vorgaben entsprechen den Ober-Sollwerten für den Masterregler 17, die am Übergabepunkt 15 gemessenen elektrischen Werte entsprechen den Ober-Istwerten für den Masterregler 17. Die vom Masterregler 17 erhaltenen Vorgaben sind die Unter-Sollwerte für die Submasterregler 18, 19. Die tatsächlich in den Strängen 13 bzw. 14 anliegenden elektrischen Werte entsprechen den Unter-Istwerten für die Submasterregler 18, 19. Die elektrischen Werte in den Strängen 13 bzw. 14 werden nicht direkt gemessen, sondern aus den Istwerten an den Windenergieanlagen 11, 12 errechnet.

Fällt der Masterregler 17 aus, so erhalten die Submasterregler 18, 19 keine Vorgaben mehr vom Masterregler 17. In einer Alternative ist der Windpark auf diesen Fall dadurch vorbereitet, dass in dem Submasterregler 18 zusätzlich die Funktionalität des Masterreglers hinterlegt ist. Unmittelbar nach dem Ausfall des Masterreglers 17 wird die Datenübertragung so umgeschaltet, dass die Ober-Sollwerte und die Ober-Istwerte an den Submasterregler 18 übertragen werden. In seiner Funktion als neuer Masterregler ermittelt der Submasterregler 18 Vorgaben für die untere Regelebene. Für den Strang 13 verarbeitet der Submasterregler 18 die Vorgaben direkt selbst, für den Strang 14 werden die Vorgaben an den Submasterregler 19 übermittelt. Da der Submasterregler 18 die Funktion des Masterreglers identisch nachbildet, kann der Windpark ohne Einschränkungen weiter betrieben werden.

Bei einer alternativen Ausführungsform, bei der die Funktionalität des Masterreglers nicht redundant vorhanden ist, werden die Ober-Sollwerte und die Ober-Istwerte des Masterreglers 17 auch an die Submasterregler 18, 19 übermittelt. Bei Ausfall des Masterreglers 17 arbeiten die Submasterregler 18, 19 mit den zuletzt vom Masterregler 17 erhaltenen Vorgaben weiter und beobachten dabei ständig, wie sich die Ober-Istwerte und die Ober-Sollwerte entwickeln. Der Betrieb nach den letzten erhaltenen Vorgaben wird so lange fortgesetzt, bis die Differenz zwischen Ober-Istwerten und Ober-Sollwerten eine vorgegebene Schwelle überschreitet. Nach Überschreiten der Schwelle fallen die Submasterregler 18, 19 auf einen voreingestellten Behelfsbetrieb zurück. Im Behelfsbetrieb werden die Ober-Sollwerte einfach prozentual unter den Submasterreglern 18, 19 aufgeteilt. Danach erhält beispielsweise der Strang 13 mit seinen drei Windenergieanlagen 11 die feste Vorgabe, 3/5 der als Ober-Sollwert geforderten Blindleistung bereitzustellen, während 2/5 von den beiden Windenergieanlagen 12 des Strangs 14 bereitgestellt werden.

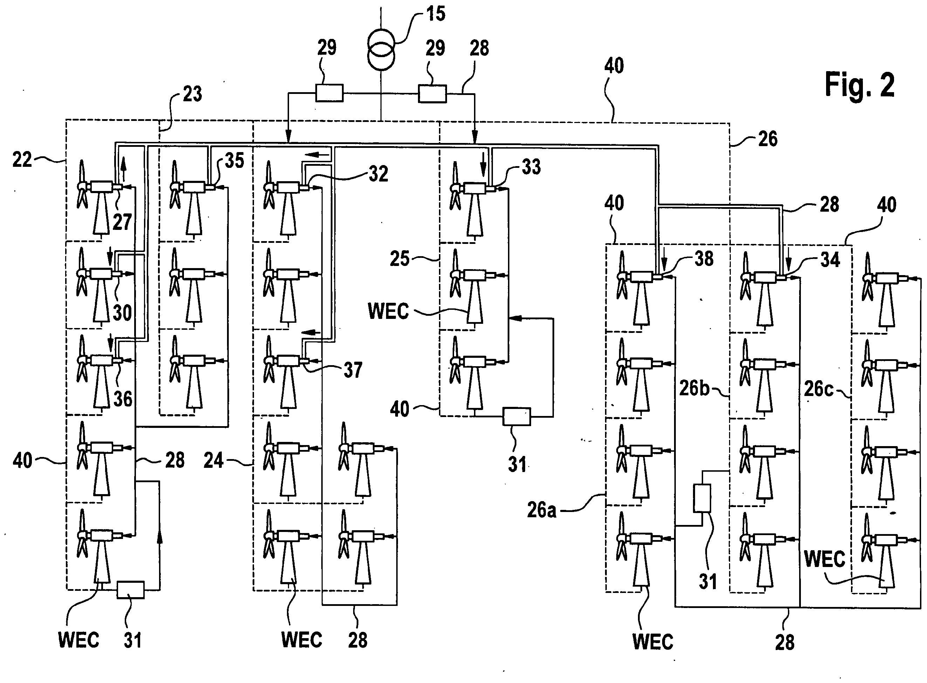

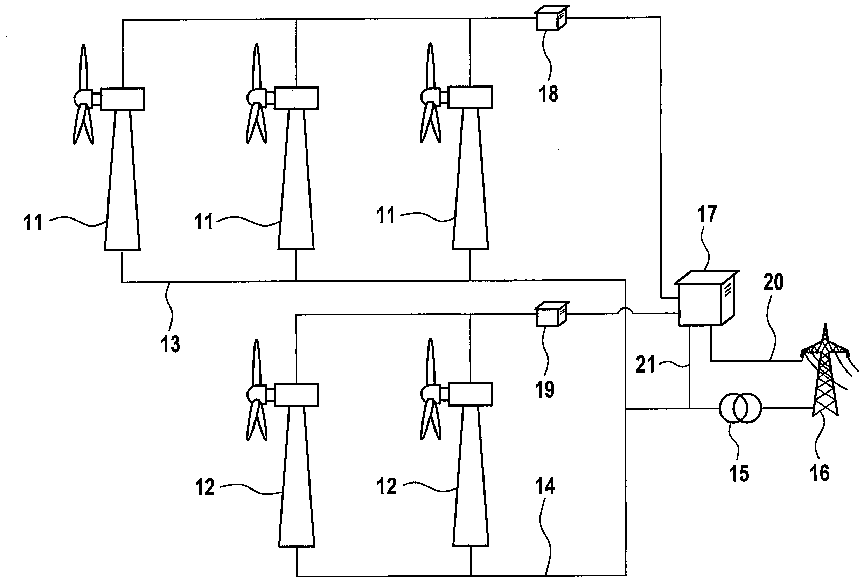

In der Ausführungsform der Fig. 2 verteilen sich die Windenergieanlagen WEC auf fünf Stränge 22, 23, 24, 25, 26. Der Strang 22 umfasst fünf Windenergieanlagen WEC, der Strang 23 umfasst drei Windenergieanlagen WEC, der Strang 24 umfasst sieben Windenergieanlagen WEC, der Strang 25 umfasst drei Windenergieanlagen WEC und der Strang 26 umfasst zwölf Windenergieanlagen WEC. Über ein gestrichelt dargestelltes windparkinternes Stromnetz 40 wird der von den Windenergieanlagen WEC produzierte elektrische Strom zu dem Übergabepunkt 15 geleitet. In jede der Windenergieanlagen WEC ist ein Regelmodul integriert, weitere von den Windenergieanlagen WEC separate Regelmodule sind nicht vorgesehen. Jedes Regelmodul umfasst die Funktionalität, als Anlagenregler für die eigene Windenergieanlage WEC zu wirken. In der Funktion als Anlagenregler empfängt das Regelmodul Vorgaben von einer übergeordneten Regelebene und stellt die Windenergieanlage gemäß den Vorgaben ein. Alle Regelmodule des Windparks sind über ein Datennetz 28 verbunden und können miteinander kommunizieren.

Zudem umfasst jedes der Regelmodule die Funktionalität, zusätzlich als Submasterregler für den Strang, dem die betreffende Windenergieanlage WEC angehört, oder als Masterregler für den gesamten Windpark zu wirken. In dem in Fig. 2 dargestellten Betriebszustand übernimmt das Regelmodul der im Strang 22 ganz oben dargestellten Windenergieanlage WEC die Aufgabe des Masterreglers 27 für den gesamten Windpark. Über das Datennetz 28 ist der Masterregler 27 sowohl über die Vorgaben vom öffentlichen Stromnetz als auch über die am Übergabepunkt 15 anliegenden tatsächlichen elektrischen Werte informiert. Für die Feststellung der tatsächlichen elektrischen Werte am Übergabepunkt 15 sind redundant ausgeführte Messfühler 29 vorgesehen. Der Masterregler 27 nimmt die Vorgaben vom öffentlichen Stromnetz als Ober-Sollwert und die tatsächlichen elektrischen Werte am Übergabepunkt 15 als Ober-Istwert und ermittelt daraus Vorgaben für die untere Regelebene. Der Masterregler 27 ist der oberen Regelebene des Windparks zugeordnet. Die Vorgaben von dem Masterregler 27 werden über das Datennetz 28 an die untere Regelebene übermittelt. Der Teil des Datennetzes 28, über den die Vorgaben der oberen Regelebene übermittelt werden, ist der besseren Anschauung wegen in Doppellinie dargestellt, wobei die Pfeile die Richtung angeben, in der die Vorgaben übertragen werden.

Auf der unteren Regelebene ist der Windpark in Segmente unterteilt. In jedem Segment ist ein Submasterregler aktiv, der die vom Masterregler 27 erhaltenen Vorgaben in Vorgaben für die einzelnen Windenergieanlagen umsetzt. Die Vorgaben können beispielsweise darin bestehen, dass die vom öffentlichen Stromnetz erhaltenen Vorgaben prozentual an die Segmente verteilt werden. Die Vorgaben werden über das Datennetz 28 an die einzelnen Regelmodule verteilt. Dieser Teil des Datennetzes 28 ist in Normallinie dargestellt, wobei die Pfeile die Richtung angeben, in der die Vorgaben geleitet werden. Ausreichen kann es, wenn jedes Regelmodul nur die Informationen erhält, die für das Segment gelten, dem die betreffende Windenergieanlage WEC angehört. Alternativ kann vorgesehen sein, dass jedes Regelmodul über die Vorgaben aller Segmente informiert wird.

In dem Windpark der Fig. 2 umfasst das erste Segment der unteren Regelebene die Stränge 22 und 23. Das Regelmodul 30 des Strangs 22 ist als Submasterregler 30 für die Stränge 22 und 23 aktiv. Es verarbeitet die Vorgaben vom Masterregler 27 als Unter-Sollwert und die tatsächlich in den Strängen 22 und 23 anliegenden elektrischen Werte als Unter-Istwert. Die Information über die betreffenden Istwerte stammt von dem an den Strang 22 angeschlossenen Messfühler 31. Der Submasterregler 30 ermittelt Vorgaben für die einzelnen Windenergieanlagen WEC der Stränge 22 und 23. Die Regelmodule der Windenergieanlagen WEC wirken als Anlagenregler und stellen den Betrieb der einzelnen Windenergieanlagen WEC gemäß den Vorgaben von dem Submasterregler 31 ein. Insbesondere ist auch der Masterregler 27 zusätzlich als Anlagenregler für seine Windenergieanlage WEC aktiv und setzt in dieser Funktion die vom Submasterregler 30 erhaltenen Vorgaben für seine Windenergieanlage um.

Die übrigen Segmente der unteren Regelebene entsprechen jeweils den Strängen 24, 25, 26. In dem Strang 24 ist das Regelmodul 32 als Submasterregler aktiv, in dem Strang 25 ist das Regelmodul 33 als Submasterregler aktiv und in dem Strang 26 ist das Regelmodul 34 als Submasterregler aktiv. In den Strängen 25 und 26 sind mit 31 wiederum die Messfühler für die tatsächlichen elektrischen Werte angedeutet. Von den Messfühlern 31 stammen die Unter-Istwerte. Die Richtung, in der die Vorgaben von den Submasterreglern 30, 32, 33, 34 über den in Normallinie gezeichneten Teil des Datennetzes 28 an die Regelmodule der einzelnen Windenergieanlagen WEC verteilt werden, ist in dem Datennetz 28 mit Pfeilen gekennzeichnet.

Zusätzlich zu dem Masterregler 27 und den Submasterreglern 30, 32, 33, 34, die die betreffende Regelaufgabe aktiv ausfüllen, sind jeweils Regelmodule vorgesehen, die dieselbe Regelaufgabe haben, diese aber nur passiv ausführen. Von einer aktiven Ausfüllung der Regelaufgabe wird gesprochen, wenn die von dem Regelmodul ermittelten Vorgaben von einem nachgeordneten Regelmodule tatsächlich verarbeitet werden. Von einer passiven Ausfüllung der Regelaufgabe wird gesprochen, wenn ein Regelmodul die Vorgaben für nachgeordnete Regelmodule zwar ermittelt, die Vorgaben aber nicht verarbeitet werden. Parallel zu dem aktiven Masterregler 27 übernimmt das Regelmodul 35 die Aufgabe des passiven Masterreglers. Parallel zu den aktiven Submasterreglern 30, 32, 34 sind die Regelmodule 36, 37, 38 als passive Submasterregler im Einsatz. Fällt eines der aktiven Regelmodule aus, so kann das zugehörige passive Regelmodul ohne Unterbrechung einspringen und die betreffende Regelaufgabe übernehmen. Alle Regelmodule des Windparks sind darüber informiert, welche passiven Regelmodule für welche aktiven Regelmodule einspringen, und reagieren entsprechend. Außerdem ist in einer Prioritätenliste festgelegt, welches Regelmodul nun die Rolle des passiven Regelmoduls übernimmt, nachdem das bisherige passive Regelmodul zum aktiven Regelmodul geworden ist.

Während des laufenden Betriebs des Windparks werden die von dem aktiven Regelmodul und dem zugehörigen passiven Regelmodul ermittelten Vorgaben regelmäßig miteinander verglichen. Stimmen die Vorgaben bei der Regelmodule überein, ist dies ein Hinweis auf einen fehlerfreien Betrieb. Bei einer Abweichung ergeht sofort eine Meldung an eine Leitstelle, damit von dort entschieden werden kann, ob ein Eingriff von außen erforderlich ist. Gegebenenfalls kann durch einen Fernbefehl festgelegt werden, welches Regelmodul als das aktive behandelt werden soll. Auf die gleiche Weise werden die Daten von redundant vorhandenen Messfühlern laufend miteinander verglichen, um auf Fehler in diesem Bereich frühzeitig reagieren zu können.

Fällt nun der Masterregler 27 aus, so wird diese Information über das Datennetz 28 verbreitet. Das Regelmodul 35, das die Funktionalität des Masterreglers lediglich passiv ausgeübt hat, wechselt daraufhin in den aktiven Modus. Für die Submasterregler 30, 32, 33, 34 führt dies dazu, dass sie nun die Vorgaben von dem Regelmodul 35 als Sollwerte verarbeiten. Für die einzelnen Anlagenregler ändert sich nichts, sie empfangen weiterhin ihre Vorgaben von den Submasterreglern 30, 32, 33, 34. Auf diese Weise wird der Betrieb des Windparks ohne Unterbrechung fortgesetzt. Analog kann auch nach dem Ausfall eines Submasterreglers der Betrieb ohne Unterbrechung fortgesetzt werden. Die Funktion des ausgefallenen Submasterreglers kann durch einen anderen Submasterregler oder durch ein Regelmodul übernommen werden, das bislang nur als Anlagenregler aktiv war.

Fig. 2 zeigt eine mögliche Konfiguration, die die Reglerstruktur des Windparks einnehmen kann. In anderen Betriebszuständen können völlig andere Regelmodule als Masterregler und Submasterregler aktiv sein. Wird beispielsweise nach einem Stillstand der Windpark wieder hochgefahren, so meldet sich das Regelmodul der Windenergieanlage WEC, die als erstes den Betrieb wieder aufnimmt, als Masterregler an. Anschließend meldet sich jeweils aus jedem Segment das erste Regelmodul als aktiver Submasterregler und das zweite Regelmodul als passiver Submasterregler an. Die nachfolgenden Regelmodule stellen fest, dass bereits alle Regelaufgaben auf der oberen Regelebene und der unteren Regelebene belegt sind, und melden sich als einfacher Anlagenregler an. Die Regelmodule kommunizieren über das Datennetz 28 miteinander, um festzustellen welche Regelaufgaben noch frei sind.

Der Strang 26 des Windparks ist in weitere Stränge 26a, 26b, 26c unterteilt. Der Submasterregler 34 macht in Fig. 2 unmittelbar Vorgaben an die Windenergieanlagen WEC aller Stränge 26a, 26b, 26c. Möglich ist es auch, die Stränge 26a, 26b, 26c wiederum als eigene Regelebene anzusehen, wobei in jedem Strang ein Subsubmasterregler vorgesehen ist, der die Vorgaben vom Submasterregler 34 empfängt und in Vorgaben für die einzelnen Windenergieanlagen des betreffenden Strangs umsetzt.

## Patentansprüche

1. Windpark mit einer Vielzahl von Windenergieanlagen (11, 12, WEC), mit einem Übergabepunkt (15), an dem die von den Windenergieanlagen (11, 12, WEC) erzeugte elektrische Energie an ein öffentliches Stromnetz (16) übertragen wird und für den Sollwerte vorgegeben sind, mit einem Messfühler (29) zum Messen von elektrischen Istwerten am Übergabepunkt (15), wobei ein einer oberen Regelebene zugeordneter Masterregler (17, 27) und eine Mehrzahl von einer unteren Regelebene zugeordneten Submasterreglern (18, 19, 30, 32, 33, 34) vorgesehen sind, wobei der Masterregler (17, 27) dazu eingerichtet ist, anhand von Ober-Sollwerten und Ober-Istwerten auf der ersten Regelebene Vorgaben für die zweite Regelebene zu ermitteln und die Submasterregler (18, 19, 30, 32, 33, 34) jeweils dazu eingerichtet sind, die Vorgaben als Unter-Sollwerte zu nehmen und anhand von den Unter-Sollwerten und Unter-Istwerten Vorgaben für eine Mehrzahl von Windenergieanlagen (11, 12, WEC) zu machen, wobei Anlagenregler der einzelnen Windenergieanlagen (11, 12, WEC) dazu eingerichtet sind, die Vorgaben der Submasterregler (18, 19, 30, 32, 33, 34) umzusetzen.

2. Windpark nach Anspruch 1, **dadurch gekennzeichnet, dass** eine Mehrzahl von als Masterregler (27) einsetzbaren Regelmodulen (27, 35) vorgesehen ist.

3. Windpark nach Anspruch 1 oder 2, **dadurch gekennzeichnet, dass** ein Regelmodul vorgesehen ist, das derart ausgebildet ist, dass es wahlweise als Masterregler (17, 27), als Submasterregler (18, 19, 30, 32, 33, 34) oder als Anlagenregler für eine einzelne Windenergieanlage (11, 12, WEC) einsetzbar ist.

4. Windpark nach einem der Ansprüche 1 bis 3, **dadurch gekennzeichnet, dass** ein Regelmodul vorgesehen ist, das derart ausgebildet ist, dass es zugleich als Masterregler (17, 27), als Submasterregler (18, 19, 30, 32, 33, 34) und/oder als Anlagenregler für eine einzelne Windenergieanlage (11, 12, WEC) einsetzbar ist.

5. Windpark nach einem der Ansprüche 1 bis 4, **dadurch gekennzeichnet, dass** zwei Messfühler (29) vorgesehen sind, um dieselben Istwerte am Übergabepunkt (15) zu messen.

6. Verfahren zum Regeln eines Windparks, bei dem die von den Windenergieanlagen (11, 12, WEC) erzeugte elektrische Energie an einem Übergabepunkt (15) an ein öffentliches Stromnetz (16) übertragen wird, bei dem Istwerte am Übergabepunkt (15) gemessen und mit vom öffentlichen Stromnetz (16) erhaltenen Sollwerten verglichen werden, bei dem ein einer oberen Regelebene zugehöriger Masterregler (17, 27) Ober-Istwerte und Ober-Sollwerte vergleicht und daraus Vorgaben für eine untere Regelebene ermittelt, und bei dem eine Mehrzahl von der unteren Regelebene zugehörigen Submasterreglern (18, 19, 30, 32, 33, 34) jeweils die Vorgaben des Masterreglers (17, 27) als Unter-Sollwert nimmt, diese mit einem Unter-Istwert vergleicht und daraus eine Vorgabe für den Betrieb einer Mehrzahl von Windenergieanlagen (11, 12, WEC) ermittelt, wobei die Vorgaben der Submasterregler (18, 19, 30, 32, 33, 34) von Anlagenregler der einzelnen Windenergieanlagen (11, 12, WEC) umgesetzt werden.

7. Verfahren nach Anspruch 6, **dadurch gekennzeichnet, dass** auf der oberen Regelebene ein zweites Regelmodul (35) vorgesehen ist, das dieselbe Regelaufgabe wie der Masterregler (17, 27) hat und das bei einem Ausfall des Masterregler (17, 27) die Regelaufgabe des Masterreglers (17, 27) aktiv übernimmt.

8. Verfahren nach Anspruch 7, **dadurch gekennzeichnet, dass** die Vorgaben des Masterreglers (17, 27) und des zweiten Regelmoduls (35) miteinander verglichen werden.

9. Verfahren nach Anspruch 8 oder 9, **dadurch gekennzeichnet, dass** ein einer Windenergieanlage (11, 12, WEC) zugeordnetes Regelmodul beim Hochfahren der Windenergieanlage (11, 12, WEC) eine Abfrage macht, welche anderen Regelmodule bereits aktiv sind und dass anhand der Abfrage entschieden wird, ob sich das Regelmodul als Masterregler (17, 27), als Submasterregler (18, 19, 30, 32, 33, 34) und/oder als Anlagenregler für eine einzelne Windenergieanlage (11, 12, WEC) aktiviert.

10. Verfahren nach einem der Ansprüche 6 bis 9, **dadurch gekennzeichnet, dass** die für den Masterregler (17, 27) gültigen Ober-Istwerte und Ober-Sollwerte zusätzlich an die Submasterregler (18, 19, 30, 32, 33, 34) übermittelt werden.

11. Verfahren nach einem der Ansprüche 6 bis 10, **dadurch gekennzeichnet, dass** der Unter-Istwert aus einer Mehrzahl von Anlagen-Istwerten berechnet wird.

12. Verfahren nach einem der Ansprüche 6 bis 11 , **dadurch gekennzeichnet, dass** ein Messfühler (31) vorgesehen ist, mit dem der Unter-Istwert direkt gemessen wird.

13. Verfahren nach einem der Ansprüche 6 bis 12, **dadurch gekennzeichnet, dass** ein Submasterregler (18, 19, 30, 32, 33, 34), wenn er keine Vorgaben vom Masterregler (17, 27) mehr erhält, für eine vorbestimmte Zeitspanne mit den zuletzt vom Masterregler (17, 27) erhaltenen Vorgaben weiterbetrieben wird und dass der Submasterregler (18, 19, 30, 32, 33, 34) anschließend auf vorgegebene Unter-Sollwerte zurückgreift.

14. Verfahren nach einem der Ansprüche 6 bis 13, **dadurch gekennzeichnet, dass** die von einem Messfühler (31) gemessenen, für einen Submasterregler (18, 19, 30, 32, 33, 34) gültigen Unter-Istwerte an alle Submasterregler (18, 19, 30, 32, 33, 34) übertragen werden.

15. Verfahren nach einem der Ansprüche 6 bis 14, **dadurch gekennzeichnet, dass** die für einen Submasterregler (18, 19, 30, 32, 33, 34) als Unter-Sollwert gültige Vorgabe des Masterreglers (17, 27) an alle Submasterregler (18, 19, 30, 32, 33, 34) übertragen wird.

## Claims

1. Wind farm having a multiplicity of wind energy installations (11, 12, WEC), having a transfer point (15) at which the electrical energy which is generated by the wind energy installations (11, 12, WEC) is transferred to a public electricity grid system (16) and for which nominal values are prespecified, having a measurement sensor (29) for measuring electrical actual values at the transfer point (15), wherein a master regulator (17, 27), which is associated with an upper control level, and a plurality of submaster regulators (18, 19, 30, 32, 33, 34), which are associated with a lower control level, are provided, wherein the master regulator (17, 27) is designed to ascertain prespecifications for the second control level depending on upper nominal values and upper actual values at the first control level, and the submaster regulators (18, 19, 30, 32, 33, 34) are each designed to take the prespecifications as lower nominal values and set prespecifications for a plurality of wind energy installations (11, 12, WEC) depending on the lower nominal values and lower actual values, wherein installation regulators of the individual wind energy installations (11, 12, WEC) are designed to implement the prespecifications of the submaster controllers (18, 19, 30, 32, 33, 34).

2. Wind farm according to Claim 1, **characterized in that** a plurality of control modules (27, 35), which can be used as master regulators (27), are provided.

3. Wind farm according to Claim 1 or 2, **characterized in that** a control module is provided which is formed in such a way that it can be used selectively as a master regulator (17, 27), as a submaster regulator (18, 19, 30, 32, 33, 34) or as an installation regulator for an individual wind energy installation (11, 12, WEC).

4. Wind farm according to one of Claims 1 to 3, **characterized in that** a control module is provided which is formed in such a way that it can be used simultaneously as a master regulator (17, 27), as a submaster regulator (18, 19, 30, 32, 33, 34) and/or as an installation regulator for an individual wind energy installation (11, 12, WEC).

5. Wind farm according to one of Claims 1 to 4, **characterized in that** two measurement sensors (29) are provided in order to measure the same actual values at the transfer point (15).

6. Method for controlling a wind farm, in which the electrical energy which is generated by the wind energy installations (11, 12, WEC) is transferred at a transfer point (15) to a public electricity grid system (16), in which method actual values are measured at the transfer point (15) and compared with nominal values which are obtained from the public electricity grid system (16), in which method a master regulator (17, 27), which is associated with an upper control level, compares upper actual values and upper nominal values and uses these to ascertain prespecifications for a lower control level, and in which method a plurality of submaster regulators (18, 19, 30, 32, 33, 34), which are associated with the lower control level, each take the prespecifications of the master regulator (17, 27) as a lower nominal value, compare this with a lower actual value, and use this to ascertain a prespecification for the operation of a plurality of wind energy installations (11, 12, WEC), wherein the prespecifications of the submaster regulator (18, 19, 30, 32, 33, 34) are implemented by installation regulators of the individual wind energy installations (11, 12, WEC).

7. Method according to Claim 6, **characterized in that** a second control module (35) is provided on the upper control level, has the same control task as the master regulator (17, 27) and actively takes over the control task of the master regulator (17, 27) if the master regulator (17, 27) fails.

8. Method according to Claim 7, **characterized in that** the prespecifications of the master regulator (17, 27) and of the second control module (35) are compared with one another.

9. Method according to Claim 8 or 9, **characterized in that** a control module which is associated with one wind energy installation (11, 12, WEC) makes a check during start-up of the wind energy installation (11, 12, WEC) to determine which other control modules are already active, and **in that** the check is used to decide whether the control module is activated as a master regulator (17, 27), as a submaster regulator (18, 19, 30, 32, 33, 34) and/or as an installation regulator for an individual wind energy installation (11, 12, WEC).

10. Method according to one of Claims 6 to 9, **characterized in that** the upper actual values and upper nominal values which are applicable to the master regulator (17, 27) are additionally transmitted to the submaster regulators (18, 19, 30, 32, 33, 34).

11. Method according to one of Claims 6 to 10, **characterized in that** the lower actual value is calculated from a plurality of installation actual values.

12. Method according to one of Claims 6 to 11, **characterized in that** a measurement sensor (31) is provided, by way of which the lower actual value is directly measured.

13. Method according to one of Claims 6 to 12, **characterized in that**, when it no longer receives any prespecifications from the master regulator (17, 27), a submaster regulator (18, 19, 30, 32, 33, 34) continues to operate for a predetermined time period with the prespecifications most recently received from the master regulator (17, 27), and **in that** the submaster regulator (18, 19, 30, 32, 33, 34) then reverts to prespecified lower nominal values.

14. Method according to one of Claims 6 to 13, **characterized in that** the lower actual values which are measured by a measurement sensor (31) and are applicable to a submaster regulator (18, 19, 30, 32, 33, 34) are transmitted to all the submaster regulators (18, 19, 30, 32, 33, 34).

15. Method according to one of Claims 6 to 14, **characterized in that** the prespecification, which is applicable as a lower nominal value for a submaster regulator (18, 19, 30, 32, 33, 34), of the master regulator (17, 27) is transmitted to all the submaster regulators (18, 19, 30, 32, 33, 34).

## Revendications

1. Parc éolien, pourvu d'une pluralité d'éoliennes (11, 12, WEC), avec un point de transfert (15), sur lequel l'énergie électrique générée par les éoliennes (11, 12, WEC) est transmise à un réseau électrique public (16) et pour lequel des valeurs de consigne sont prédéfinies, avec une sonde de mesure (29), destinée à mesurer des valeurs réelles électriques au point de transfert (15), un régulateur maître (17, 27) associé à un niveau de régulation supérieur et une pluralité de régulateurs sous-maîtres (18, 19, 30, 32, 33, 34) associés à un niveau de régulation inférieur étant prévus, le régulateur maître (17, 27) étant aménagé pour déterminer sur le premier niveau de régulation, à l'aide de valeurs de consigne supérieures et de valeurs réelles supérieures des prescriptions pour le deuxième niveau de régulation et les régulateurs sous-maîtres (18, 19, 30, 32, 33, 34) étant aménagés chacun pour prendre les prescriptions comme étant des valeurs de consigne inférieures et à l'aide des valeurs de consigne inférieures et des valeurs réelles inférieures établir des prescriptions pour une pluralité d'éoliennes (11, 12, WEC), des régulateurs d'éolienne des éoliennes (11, 12, WEC) individuelles étant aménagés pour concrétiser les prescriptions des régulateurs sous-maîtres (18, 19, 30, 32, 33, 34).

2. Parc éolien selon la revendication 1, **caractérisé en ce qu'**il est prévu une pluralité de modules de régulation (27, 35) utilisables en tant que régulateur maître (27).

3. Parc éolien selon la revendication 1 ou 2, **caractérisé en ce qu'**il est prévu un module de régulation qui est conçu de sorte à être utilisable au choix en tant que régulateur maître (17, 27), en tant que régulateur sous-maître (18, 19, 30, 32, 33, 34) ou en tant que régulateur d'éolienne pour une éolienne (11, 12, WEC) individuelle.

4. Parc éolien selon l'une quelconque des revendications 1 à 3, **caractérisé en ce qu'**il est prévu un module de régulation qui est conçu de sorte à être utilisable simultanément en tant que régulateur maître (17, 27), en tant que régulateur sous-maître (18, 19, 30, 32, 33, 34) et/ou en tant que régulateur d'éolienne pour une éolienne (11, 12, WEC) individuelle.

5. Parc éolien selon l'une quelconque des revendications 1 à 4, **caractérisé en ce que** deux sondes de mesure (29) sont prévues pour mesurer les mêmes valeurs réelles au point de transfert (15).

6. Procédé, destiné à réguler un parc éolien, dans lequel l'énergie électrique générée par les éoliennes (11, 12, WEC) est transmise sur un point de transfert (15) à un réseau électrique public (16), lors duquel des valeurs réelles sont mesurées au point de transfert (15) et comparées avec des valeurs de consigne obtenues par le réseau électrique public (16), lors duquel un régulateur maître (17, 27) appartenant à un niveau de régulation supérieur compare des valeurs réelles supérieures et des valeurs de consigne supérieures pour en déterminer des prescriptions pour un niveau de régulation inférieur, et lors duquel une pluralité de régulateurs sous-maîtres (18, 19, 30, 32, 33, 34) appartenant au niveau de régulation inférieur prend respectivement les prescriptions du régulateur maître (17, 27) comme valeur de consigne inférieure, les compare avec une valeur réelle inférieure et en détermine une prescription pour le fonctionnement d'une pluralité d'éoliennes (11, 12, WEC), les prescriptions des régulateurs sous-maîtres (18, 19, 30, 32, 33, 34) étant concrétisées par des régulateurs d'éolienne des éoliennes (11, 12, WEC) individuelles.

7. Procédé selon la revendication 6, **caractérisé en ce que** sur le niveau de régulation supérieur, il est prévu un deuxième module de régulation (35), qui a la même mission de régulation que le régulateur maître (17, 27) et qui en cas d'une panne du régulateur maître (17, 27) reprend activement la mission de régulation du régulateur maître (17, 27).

8. Procédé selon la revendication 7, **caractérisé en ce que** les prescriptions du régulateur maître (17, 27) et du deuxième module de régulation (35) sont comparées les unes aux autres.

9. Procédé selon la revendication 8 ou 9, **caractérisé en ce que** lors du démarrage d'une éolienne (11, 12, WEC), un module de régulation associé à une éolienne (11, 12, WEC) procède à une interrogation, à savoir quels sont les autres modules de régulation déjà actifs et **en ce qu'**à l'aide de l'interrogation, il est décidé si le module de régulation s'active en tant que régulateur maître (17, 27), en tant que régulateur sous-maître (18, 19, 30, 32, 33, 34) et/ou tant que régulateur d'éolienne pour une éolienne (11, 12, WEC) individuelle.

10. Procédé selon l'une quelconque des revendications 6 à 9, **caractérisé en ce que** les valeurs réelles supérieures et les valeurs de consigne supérieures valables pour le régulateur maître (17, 27) sont transmises en supplément aux régulateurs sous-maîtres (18, 19, 30, 32, 33, 34).

11. Procédé selon l'une quelconque des revendications 6 à 10, **caractérisé en ce que** la valeur réelle inférieure est calculée à partir d'une pluralité de valeurs réelles d'éoliennes.

12. Procédé selon l'une quelconque des revendications 6 à 11, **caractérisé en ce qu'**il est prévu une sonde de mesure (31) à l'aide de laquelle la valeur réelle inférieure est directement mesurée.

13. Procédé selon l'une quelconque des revendications 6 à 12, **caractérisé en ce que** si un régulateur sous-maître (18, 19, 30, 32, 33, 34) ne reçoit plus aucune prescription du régulateur maître (17, 27), il continue de fonctionner pour une période prédéfinie avec les prescriptions reçues en dernier lieu par le régulateur maître (17, 27) et **en ce que** le régulateur sous-maître (18, 19, 30, 32, 33, 34) a recours par la suite à des valeurs de consigne inférieures prédéfinies.

14. Procédé selon l'une quelconque des revendications 6 à 13, **caractérisé en ce que** les valeurs réelles inférieures mesurées par une sonde de mesure (31), valables pour un régulateur sous-maître (18, 19, 30, 32, 33, 34) sont transmises à tous les régulateurs sous-maîtres (18, 19, 30, 32, 33, 34).

15. Procédé selon l'une quelconque des revendications 6 à 14, **caractérisé en ce que** la prescription du régulateur maître (17, 27) valable en tant que valeur de consigne inférieure pour un régulateur sous-maître (18, 19, 30, 32, 33, 34) est transmise à tous les régulateurs sous-maîtres (18, 19, 30, 32, 33, 34).
